# EUROPÄISCHE PATENTANMELDUNG

(11) **EP 1 970 159 A1**
(43) Veröffentlichungstag der Anmeldung: **17.09.2008**
(21) Anmeldenummer: 08003417.6
(22) Anmeldetag: 26.02.2008
(51) Int. Cl.: B24B 7/17, B24B 37/04, B24B 49/14, B24B 49/16, H04Q 9/00, G08C 17/02, G08C 23/04

(54) **Bearbeitungsmaschine mit Mitteln zur Erfassung von Bearbeitungsparametern**

(30) Priorität: 13.03.2007 DE 102007011880
(71) Anmelder: Peter Wolters GmbH, 24768 Rendsburg (DE)
(72) Erfinder: Fischer, Harald, 56338 Braubach (DE)
(74) Vertreter: Graalfs, Edo

(57) **Zusammenfassung**

Bearbeitungsmaschine mit einer oberen rotierend antreibbaren Arbeitsscheibe (10), deren ringförmige Arbeitsfläche (22) einen Arbeitsbelag (26) aufweist und einer unteren Arbeitsfläche (24) zugekehrt ist, wobei die Arbeitsflächen zwischen sich einen Arbeitsspalt (30) bilden, in dem mehrere Läuferscheiben angeordnet sind, die in Ausnehmungen Werkstücke aufnehmen und mittels einer Abwälzvorrichtung in Rotation versetzbar sind, wodurch die sich entlang einer zykloidischen Bahn bewegen, wobei in der oberen Arbeitsscheibe über ihren Querschnitt verteilt mehrere Sensorelemente (32) zur Erfassung von mindestens einem Bearbeitungsparameter angeordnet sind, die Sensorelement jeweils mit einem passiven oder aktiven RFID-Chip gekoppelt sind und der oberen Arbeitsscheibe eine Lesevorrichtung (34) zugeordnet ist zur Auslesung der RFID-Chips.

## Beschreibung

Die Erfindung bezieht sich auf eine Bearbeitungsmaschine mit Mitteln zur Erfassung von Bearbeitungsparametern.

Die Erfindung bezieht sich auf eine Arbeitsmaschine, die mindestens eine obere Arbeitsscheibe aufweist mit ringförmiger Arbeitsfläche, die um eine vertikale Achse drehend antreibbar ist. Der oberen Arbeitsfläche ist eine untere Arbeitsfläche zugeordnet, die entweder stationär oder an einer unteren Arbeitsscheibe angebracht ist. Zwischen den Arbeitsflächen ist ein Arbeitsspalt ausgebildet, in dem Läuferscheiben angeordnet sind, die in Ausnehmungen Werkstücke aufnehmen. Die Läuferscheiben werden mit Hilfe einer Abwälzvorrichtung, beispielsweise mit Hilfe von Stift- oder Zahnkränzen ihrerseits in rotierende Bewegung versetzt, so daß sie sich mit den Werkstücken auf einer zykloidischen Bahnkurve bewegen. Bei Arbeitsmaschinen mit oberer und unterer Arbeitsscheibe spricht man von einer Doppelseitenmaschine. Mit ihnen erfolgt eine planparallele Bearbeitung der Werkstücke, beispielsweise von Halbleiterscheiben (Wafer). Die Bearbeitung kann in einem Schleifen, Läppen, Polieren oder dergleichen bestehen. Je nach Bearbeitungsvorgang weisen die Arbeitsflächen Arbeitsbeläge auf, die mit den Werkstücksflächen in Eingriff gelangen. Je nach Bearbeitungsvorgang wird in den Arbeitsspalt ein Kühlschmiermittel eingeleitet, das gegebenenfalls Polier- bzw. Läppmaterial enthält.

In DE 103 44 602 A1 ist zum Beispiel ein Schleifverfahren nach dem sogenannten "Floating Processing" offenbart, um einen Materialabtrag schnell und wirtschaftlich durchzuführen. In diesem Verfahren werden die Werkstücke relativ lose in den Ausnehmungen der Läuferscheiben aufgenommen.

Für die Präzision der Werkstückflächen, d.h. ihre absolute Planheit und Parallelität ist die Geometrie des Arbeitsspaltes maßgebend. Entscheidend ist, daß der Arbeitsspalt durch weitgehend parallele Arbeitsflächen gebildet ist. Es hat sich jedoch gezeigt, daß thermische Ausdehnungseffekte den Arbeitsspalt beeinflussen und zu einer unerwünschten Werkstückgeometrie führen. Die Verformung der Arbeitsscheiben während des Schleifprozesses beruht auf einem Bimetalleffekt, in dem Bereiche der Arbeitsscheibe unterschiedlich erwärmt werden.

Aus DE 10 2004 040 429 ist bekannt, diesen Bimetalleffekt zur Verformung der Arbeitsscheibe zu benutzen, indem die Temperatur einer Trägerscheibe für die Arbeitsscheibe, beeinflußt wird und zwar in Abhängigkeit von der Temperatur der Arbeitsscheibe. Letztere wird so verformt, daß die Arbeitsfläche eine bestimmte Kontur erhält, um einen weitgehend parallelen Arbeitsspalt zu erzielen.

Bei Arbeitsscheiben, die unmittelbar einen Arbeitsbelag aufweisen, der mit zunehmendem Einsatz abgetragen wird, wird es erforderlich, die Arbeitsscheibe auszutauschen bzw. einen neuen Belag aufzubringen, wenn dieser um ein bestimmtes Maß abgetragen worden ist.

Für den Zustand des Arbeitsspaltes bzw. seine Regelung ist die Temperatur im Arbeitsspalt maßgebend. Aus der oben erwähnten Schrift ist bereits bekannt, neben dem Abstand der Arbeitsscheiben auch die Temperatur der Arbeitsscheibe bzw. im Arbeitsspalt zu messen.

Die obere Arbeitsscheibe wird mit einem vorgegebenen Druck gegen die untere Arbeitsfläche angedrückt. Für die Temperatur und das Ausmaß des zeitlichen Abtrags ist der Druck nicht unwesentlich. Bei bekannten Arbeitsmaschinen läßt sich ein vorgegebener Druck auf die Arbeitsscheibe aufbringen, ohne daß bekannt ist, wie groß die Flächenpressung auf der zu bearbeitenden Fläche der Werkstücke ist.

Der Erfindung liegt die Aufgabe zugrunde, eine Bearbeitungsmaschine der eingangs genannten Art dahingehend zu verbessern, daß sie Mittel zur Ermittlung mindestens eines Betriebsparameters aufweist, die in einfacher Form angeordnet und abgelesen werden können.

Diese Aufgabe wird durch die Merkmale des Patentanspruchs 1 gelöst.

Bei der erfindungsgemäßen Bearbeitungsmaschine sind in der oberen Arbeitsscheibe über ihren Querschnitt verteilt mehrere Sensorelemente zur Erfassung von Bearbeitungsparametern angeordnet. Die Sensorelemente sind mit einem passiven oder aktiven RFID-Chip gekoppelt, und der oberen Arbeitsscheibe ist eine Lesevorrichtung zugeordnet zur Auslesung der RFID-Chips.

RFID-Chips ermöglichen eine automatische Identifikation und Lokalisierung von Objekten. Sie werden auch als Transponder bezeichnet. Sie enthalten einen Chip mit einem Speicher und einer Antenne. Je nach Energie und Frequenzband können derartige RFID-Chips über eine gewisse Strecke Daten drahtlos auf ein Lesegerät übertragen, wenn dieses ein Abfragesignal erzeugt. Das Lesegerät erzeugt ein hochfrequentes elektromagnetisches Wechselfeld, welches von der Antenne des RFID-Transponders empfangen wird. Der Induktionsstrom der Antennenspule des Chips aktiviert den Mikrochip im Transponder. Bei passiven RFIDs wird ein Kondensator aufgeladen, welcher für die Stromversorgung des Chips sorgt. Der Transponder sendet ein Feld aus, das mindestens eine Seriennummer oder andere vom Lesegerät abgefragte Daten enthält.

Es ist auch bereits bekannt geworden, derartige RFID-Chips oder Transponder mit Sensoren zu koppeln. Nach einer Ausgestaltung der Erfindung können Drucksensoren vorgesehen werden, welche den Druck messen, der von der Arbeitsfläche aus auf die Werkstücke gerichtet wird. Mit Hilfe mehrerer Sensoren, die zum Beispiel gleichmäßig über die Arbeitsfläche verteilt in der Arbeitsscheibe angeordnet sind, läßt sich mithin ein Druckprofil innerhalb des Arbeitsspaltes ermitteln. Das gleiche trifft zu bei Verwendung von Temperatursensoren. Mit einer Vielzahl von Temperatursensoren läßt sich ein Temperaturprofil im Arbeitsspalt ermitteln. Durch geeignete Beeinflussung der Geometrie des Arbeitsspaltes kann daher in Abhängigkeit vom Temperaturprofil eine Steuerung oder Regelung derart vorgenommen werden, daß die gewünschte Geometrie des Arbeitsspalts erzielt wird.

Schließlich kann mit Hilfe von Sensoren auch der Verschleiß eines Belags für eine Arbeitsscheibe sensiert werden, zum Beispiel dadurch, daß die Eigenfrequenz der Sensoren sich mit der Dicke der Belagsschicht ändert.

Die einzelnen RFID-Chips haben eine spezielle Kennung, und das Verteilungsmuster der Chips innerhalb der Arbeitsscheibe steht fest. Daher kann mehr oder weniger punktweise die Temperatur, der Druck oder ein sonstiger Parameter im Arbeitsspalt im Hinblick auf seine Koordinaten ermittelt werden.

Im Lesegerät sind die einzelnen Kennungen der einzelnen RFID-Chips gespeichert und können daher nacheinander abgefragt werden, um den zu ermittelnden Parameter am Ort des Chips auszulesen. Für die Kommunikation zwischen Lesegerät und den RFID-Chips kann ein elektrostatisches oder elektromagnetisches Feld eingesetzt werden.

Insgesamt ermöglicht der Einsatz der erfindungsgemäßen Sensorelemente mit RFID-Chips eine Verbesserung der Arbeitsprozesse, eine Erhöhung der Werkstückqualität, eine Verringerung der Beschädigung der Werkstückoberflächen und die Notwendigkeit einer erneuten Bearbeitung. Außerdem kann die Standzeit der Arbeitsmaschine optimiert werden.

Die Erfindung wird nachfolgend anhand von Zeichnungen näher erläutert.
- Fig. 1: zeigt äußerst schematisch eine Doppelseitenbearbeitungsmaschine nach der Erfindung.
- Fig. 2: zeigt ausschnittweise eine Ansicht der Arbeitsfläche der oberen Arbeitsscheibe nach Fig. 1.
- Fig. 3: zeigt perspektivisch ein Segment der Arbeitsscheibe nach Fig. 2 zusammen mit einem Sensor.
- Fig. 4: zeigt perspektivisch ein Segment der Arbeitsscheibe nach Fig. 2 mit einem anderen Sensor.

Eine obere Arbeitsscheibe 10 und eine untere Arbeitsscheibe 12 weisen jeweils eine Trägerscheibe 14 bzw. 16 auf, die mit Hilfe einer vertikalen Antriebswelle 18 bzw. 20 rotierend angetrieben werden können. Die Antriebsmittel der Arbeitsscheiben sowie ihre Lagerung und auch die Wegschwenkbarkeit der oberen Arbeitsscheibe 10 für den Zugang zu Werkstücken zwischen den Arbeitsscheiben sind nicht dargestellt. Eine derartige Doppelseitenbearbeitungsmaschine ist allgemein bekannt.

Die Arbeitsscheiben 10, 12 weisen einander zugekehrte Arbeitsflächen 22 bzw. 24 auf. Sie gebildet werden von Tüchern, beispielsweise Polier- oder Schleiftüchern oder auch von einem Belag aus abrasivem Material, wie im vorliegenden Fall bei 26 bzw. 28 dargestellt. Die Arbeitsflächen 22, 24 bilden einer Arbeitsspalt 30, der nach Möglichkeit über seine gesamte Erstreckung konstante Weite aufweisen soll, um ein planparalleles Bearbeiten von Werkstücken im Arbeitsspalt 30 zu gewährleisten. Insbesondere thermische Auswirkungen durch den Bearbeitungsprozeß (Reibung) können die Geometrie der oberen Arbeitsscheibe 10 beeinflussen, beispielsweise über einen Bimetalleffekt durch unterschiedliche Erwärmung. Die Werkstücke im Arbeitsspalt 30 werden mit Hilfe sogenannter Läuferscheiben gehalten, die in Ausnehmungen die Werkstücke aufnehmen. Die Läuferscheiben werden ihrerseits durch Rotation in eine zykloidische Bahn gebracht, wobei sie sich mit einer Außenverzahnung innen und außen an Stift- oder Zahnkränzen abwälzen. Auch dieses Prinzip ist allgemein bekannt.

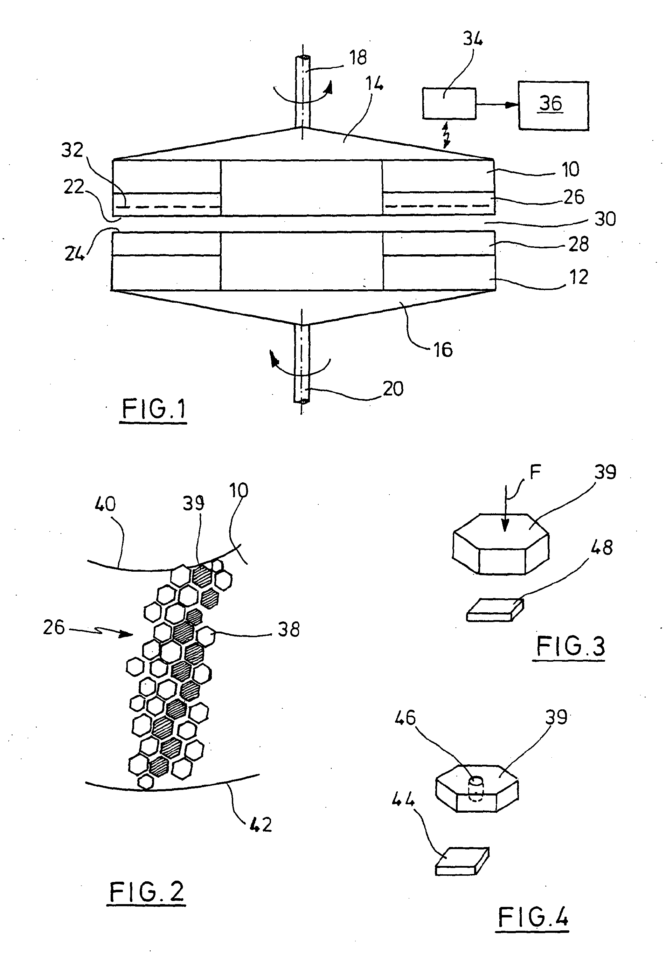

Für den optimalen Betrieb einer derartigen Arbeitsmaschine ist es von Vorteil, während der Bearbeitung einen oder mehrere Bearbeitungsparameter messen zu können, beispielsweise die Temperatur, den Druck auf den Werkstücken, den Verschleiß der Arbeitsbeläge 26, 28, die Weite des Arbeitsspaltes und dergleichen. In Fig. 1 ist eine Vielzahl von annähernd gleichmäßig über den Querschnitt verteilte Sensorelementen 32 eingezeichnet, die jeweils eine Einheit mit einem RFID-Chip bilden. Derartige RFID-Chips mit Sensorelementen sind bekannt und können eine vergleichsweise sehr geringe Größe aufweisen. Sie sind in einer Ebene der in Arbeitsschicht 26 eingebettet, die parallel zu der Arbeitsfläche 22 ist. Die Sensoren können etwa die Temperatur, den Druck, die Weite des Arbeitsspalts usw. messen. Die RFID-Chips sind passiv und enthalten neben einem Mikroprozessor einen Speicher, in dem eine Identifikation abgelegt ist, die das Chip und den Ort, an dem er angebracht ist, kennzeichnet. Mit Hilfe eines Lesegerätes 34 können die einzelnen Chips aktiviert und nacheinander abgefragt werden und damit auch der Zustand der Sensoren 32, d.h. zum Beispiel deren gemessene Temperatur, deren gemessene Druckkraft, deren gemessene Weite des Arbeitsspaltes 30 usw.. Nach der Aktivierung senden die Elemente 32 ihr Signal auf das Lesegerät 34, das seinerseits die Signale auf eine Steuer- und Regelvorrichtung 36 gibt, die zur Steuerung und Regelung des Arbeitsprozesses mit der gezeigten Doppelseitenbearbeitungsmaschine dient.

Sind die Sensoren 32 als Schwingkreise ausgeführt, ändert sich ihre Frequenz in Abhängigkeit des Abstandes zur Arbeitsfläche 22. Alternativ kann die Änderung der Antennenresonanz ermittelt werden. Damit läßt auch der Verschleiß des Arbeitsbelags 26 ermitteln. Falls erforderlich, können auch mehrere parallele Ebenen von Elementen 32 vorgesehen werden, um zum Beispiel den Verschleiß oder andere Parameter zu bestimmen.

Im gezeigten Fall ist der Arbeitsbelag 26 aus einzelnen sechseckigen Segmenten 38 aufgebaut, die durch ein geeignetes Bindemittel miteinander verbunden sind. Die Segmente 38 bestehen zum Beispiel aus einem Abrasivmaterial, das durch ein geeignetes Bindemittel gebunden ist. In Fig. 2 sind einzelne Segmente 39 dunkel gezeichnet. Sie ergeben eine Strecke zwischen dem Innenumfang 40 und dem Außenumfang 42 der Arbeitsscheibe 10. Unter bzw. hinter jedem der Segmente 39 ist ein Sensorelement mit RFID-Chip angeordnet. Der Sensor ist zum Beispiel ein Temperatursensor. Auf diese Weise ist es möglich, über den Radius der Arbeitsfläche 22 die Temperatur zu bestimmen. Ein solcher Temperatursensor ist bei 44 in Fig. 4 dargestellt. Er liegt hinter einem Segment 39. In das Segment ist eine Lichtleiterfaser 46 eingebettet.

Das Segment 39 in Fig. 3 liegt vor einem Drucksensor 48. Er mißt die Kraft F, die während des Arbeitsprozesses auf das Segment 39 ausgeübt wird.

Die Einheiten aus Sensor und RFID-Chip können ein Gehäuse aufweisen oder ungehäust eingebaut sein. Ein zusätzlicher, externer Kondensator zur Energieversorgung kann im Basismaterial der Arbeitsscheibe angeordnet sein. Die Einheiten können bei Herstellung der Arbeitsscheibe mit eingegossen und mit gebrannt werden. Andere Anbringungsmöglichkeiten sind denkbar.

Die Einheiten können auch mit DMS gekoppelt sein, um die Arbeitsflächengeometrie zu messen.

## Patentansprüche

1. Bearbeitungsmaschine mit einer oberen rotierend antreibbaren Arbeitsscheibe, deren ringförmige Arbeitsfläche einen Arbeitsbelag aufweist und einer unteren Arbeitsfläche zugekehrt ist, wobei die Arbeitsflächen zwischen sich einen Arbeitsspalt bilden, in dem mehrere Läuferscheiben angeordnet sind, die in Ausnehmungen Werkstücke aufnehmen und mittels einer Abwälzvorrichtung in Rotation versetzbar sind, wodurch sie sich entlang einer zykloidischen Bahn bewegen, **dadurch gekennzeichnet, daß** in der oberen Arbeitsscheibe (10) über ihren Querschnitt verteilt mehrere Sensorelemente (32) zur Erfassung von mindestens einem Bearbeitungsparameter angeordnet sind, die Sensorelement (32) jeweils mit einem passiven oder aktiven RFID-Chip gekoppelt sind und der oberen Arbeitsscheibe (10) eine Lesevorrichtung (34) zugeordnet ist zur Auslesung der RFID-Chips.

2. Bearbeitungsmaschine nach Anspruch 1, **dadurch gekennzeichnet, daß** die Sensorelemente (32) mit den RFID-Chips über den Querschnitt der Arbeitsscheibe (10) annähernd gleichmäßig verteilt sind.

3. Bearbeitungsmaschine nach Anspruch 1, **dadurch gekennzeichnet, daß** die Sensorelemente mit RFID-Chips entlang eines Radius der Arbeitsfläche (22) angeordnet sind.

4. Bearbeitungsmaschine nach einem der Ansprüche 1 bis 3, **dadurch gekennzeichnet, daß** Sensorelemente mit RFID-Chips in mehreren parallel beabstandeten und parallel zur Arbeitsfläche verlaufenden Ebenen angeordnet sind.

5. Bearbeitungsmaschine nach einem der Ansprüche 1 bis 4, **dadurch gekennzeichnet, daß** die Sensorelemente oder die Antenne der RFID-Chips eine Eigenfrequenz aufweisen, die sich mit dem Abstand der Arbeitsfläche vom Sensorelement ändert und die Änderung der Eigenfrequenz auslesbar ist.

6. Bearbeitungsmaschine nach einem der Ansprüche 1 bis 5, **dadurch gekennzeichnet, daß** die Sensorelemente Drucksensoren sind.

7. Bearbeitungsmaschine nach einem der Ansprüche 1 bis 5, **dadurch gekennzeichnet, daß** die Sensorelemente Temperatursensoren sind.

8. Bearbeitungsmaschine nach einem der Ansprüche 1 bis 7, **dadurch gekennzeichnet, daß** die Arbeitsfläche (22) von einer Vielzahl von miteinander verbundenen Segmenten (38) gebildet ist und die Sensorelemente mit RFID-Chips einzelnen Segmenten (39) zugeordnet sind.

9. Bearbeitungsmaschine nach Anspruch 8, **dadurch gekennzeichnet, daß** eine optische Faser (46) in die Segmente (39) eingelassen sind, welche die Außenseite der Segmente mit deren Rückseite verbindet.
